# EUROPEAN PATENT APPLICATION

(11) **EP 4 050 747 A1**
(43) Date of publication of application: **31.08.2022**
(21) Application number: 21159334.8
(22) Date of filing: 25.02.2021
(51) Int. Cl.: H02J 3/00, B60L 58/18, H02J 7/00, H02J 13/00

(54) **SYSTEM AND METHOD FOR FAULT MANAGEMENT IN ELECTRICAL POWER GRIDS**

(71) Applicant: Siemens Aktiengesellschaft, 80333 München (DE)
(72) Inventor: KANGANTE, Vishal, 500012 Hyderabad (IN); RAJASEKARAN, Vijayaganesh, 560100 Bangalore (IN)
(74) Representative: Patentanwaltskanzlei WILHELM & BECK

(57) **Abstract**

A method and system of performing fault management in an electrical power grid (106) is disclosed. The method includes receiving a first set of parameters associated with a battery of each vehicle of a plurality of vehicles (104A, 104B, and 104C), and a second set of parameters associated with the electrical power grid (106). The method further includes determining a fault in a first vehicle (104A) of the plurality of vehicles (104A, 104B, and 104C), based on an analysis of the received first set of parameters and the received second set of parameters. The method further includes selectively disconnecting the first vehicle (104B) of the plurality of vehicles (104A, 104B, and 104C), from the electrical power grid (106) based on the determined fault, such that other vehicles of the plurality of vehicles (104A, 104B, and 104C), remain electrically coupled to the electrical power grid.

## Description

The present disclosure relates to the field of electrical power grids, and more particularly relates to a system and method for fault management in electrical power grids.

Recent years have witnessed a rise in use of electric vehicles by consumers. The rise in the use of electric vehicles has resulted in a rise in demand of electric power from electrical power grids. A load demanded, by the consumers, from the electric power grids is usually higher at night, than during the day. The load is higher at night due to functioning of air conditioning systems and electric heaters at night. Time periods during which the load is higher than normal are called peak heating hours. Since most of the electric vehicles are charged at night, a charging time of the electric vehicles usually coincides with peak heating hours associated with the electrical power grids. Thus, the electric power grids may lack enough electric power to feed the electric vehicles during the peak heating hours. In other words, the electrical power grids require operational reserves of energy to remedy the lack in the electric power during the peak heating hours.
A set of electric vehicles can be used as the operational reserves of energy for the electrical power grids. When the electrical power grids lack enough electrical power, the set of electric vehicles can supply electric power from a plurality of batteries. However, at least one battery of the plurality of batteries may have an electrical fault. An occurrence of the electrical fault in the at least one battery may be due to a plurality of reasons such as poor storage of unused batteries, high ambient temperature, over-cycling, improper float voltage associated with the at least one battery, poor electrical connection of the at least one battery to a respective electric vehicle, and thermal runaway of the at least one battery.
When the fault occurs in the at least one battery, the electric vehicle supply equipment disconnects all vehicles, of the set of electric vehicles, from the electric power grids. After the set of electric vehicles are disconnected, all vehicles in the set of electric vehicles halt supply of the electric power to the electrical power grids. Thus, the electrical power grids face further shortage of electric power. This may result in power outages in the electrical power grids, which may lead to loss of life and property.
Further limitations and disadvantages of conventional and traditional approaches will become apparent to one of skill in the art, through comparison of described systems with some aspects of the present disclosure, as set forth in the remainder of the present application and with reference to the drawings.
In light of the above, there is a need for a method and system for fault management for electrical power grids.]

Therefore, it is the object of the present disclosure to provide a system and method of performing fault management in an electrical power grid as substantially as shown in, and/or described in connection with, at least one of the figures, as set forth more completely in the claims. This object is solved by method of performing fault management in electrical power grids, a system for managing faults in an electrical power grid, a computer-program product, and an electric vehicle supply equipment.

In the following, the solution according to the invention is described with respect to the claimed system as well as with respect to the claimed method. Features, advantages or alternative embodiments herein can be assigned to the other claimed objects and vice versa. In other words, claims for the system can be improved with features described or claimed in the context of the method. In this case, the functional features of the method are embodied by objective units of the system.

Based on the abovementioned method, the invention achieves the object by selectively disconnecting a specific vehicle of a plurality of vehicles, from an electrical power grid, based on a determination that a fault is present in the specific vehicle. An advantage of the invention is that a battery of the specific vehicle is protected priorly from damages. A yet another advantage of the invention is that the battery of the protected vehicle is protected from one or more faults in the electrical power grid.

The present invention describes a method of performing fault management in electrical power grids. The method is executed in an electrical power grid which comprises at least one electric vehicle supply equipment and a plurality of vehicles. The at least one electric vehicle supply equipment is electrically coupled to the electrical power grid. The at least one electric vehicle supply equipment is a device that is configured to transfer electric power between the electric power grid and a vehicle of the plurality of vehicles. In one example, the at least one electric vehicle supply equipment is configured to charge a battery of the vehicle using electric power supplied by the electrical power grid. In another example, the at least one electric vehicle supply equipment is configured to supply electric power which is stored in the battery of the vehicle, into the electrical power grid. The vehicle may be at least one of an electric car, an electric motorcycle, or an electric drone. In one example, the vehicle may be a hybrid vehicle comprising a electric generator which is configured to generate the electric power. In one example, a battery of one or more vehicles of the plurality of vehicles is charged using electric power supplied by the electrical power grid. In another example, the battery of the one or more vehicles of the plurality of vehicles discharges electric power into the electrical power grid, to cater to power requirements of the electrical power grid. Advantageously, any shortage of electric power in the electrical power grid is remedied by discharge of a plurality of batteries in the plurality of vehicles, into the electrical power grid via the at least one electric vehicle supply equipment. In one example, each vehicle of the plurality of vehicles is electrically coupled to the electrical power grid via an electric vehicle power supply equipment of a plurality of electric vehicle supply equipment. In one example, the at least one electric vehicle supply equipment is an internet-of-things (IOT) enabled device which is configured to communicate with the plurality of electric vehicle supply equipment via an IOT network.

The method comprises receiving a first set of parameters associated with a battery of each vehicle of the plurality of vehicles. The battery of each vehicle may be at least one of a lithium ion battery, a lead ion battery, or a nickel cadmium battery. Examples of the first set of parameters associated with the battery includes a battery level, a battery discharging rate, voltage, current, temperature, unique ID and a number of battery cycles associated with the battery of each vehicle of the plurality of vehicles. The method further comprises receiving a second set of parameters which are associated with the electrical power grid. The second set of parameters comprises a load demanded by the electrical power grid, a load increment, a peak demand, a main supply availability, an electrical load prediction data, information associated with power surges in the electrical power grid, and information about voltage fluctuations in the electrical power grid.

The method further comprises determining, by the at least one electric vehicle supply equipment, a fault in a first vehicle of the plurality of vehicles. The determined fault is an electrical fault in a battery of the first vehicle. Examples of the determined fault includes, but is not limited to temperature based battery faults, voltage based battery faults, current based voltage faults, short circuits in the battery of the first vehicle, and open circuits in the battery of the first vehicle. The fault is determined based on an analysis of the received first set of parameters and the received second set of parameters. In one example, the received first set of parameters and the received second set of parameters are analyzed with a protection algorithm. The protection algorithm is an computer executable algorithm, which when executed by the computer, cause the computer to determine the fault in the first vehicle of the plurality of vehicles. In one example, the protection algorithm is stored in the at least one electric vehicle supply equipment. In another example, the protection algorithm is stored in an external server. In such a case, the external server is configured to receive the first set and the second set of parameters from the at least one electric vehicle supply equipment. Further, in such a case, the external server is configured to analyze the first set and the second set of parameters to determine the fault in the first vehicle of the plurality of vehicles. In another example, the first set of parameters and the second set of parameters are analyzed based on an artificial intelligence model which is trained to predict the fault in the first vehicle of the plurality of vehicles.
According to an embodiment, the method further comprises selectively disconnecting the first vehicle from the electrical power grid based on the determined fault, such that other vehicles of the plurality of vehicles remain electrically coupled to the electrical power grid. Advantageously, the electrical power grid is protected from the determined fault of the battery of the first vehicle. Further, advantageously, the determined fault of the first vehicle are prevented from being exacerbated by connection to the electrical power grid. The method further comprises transmitting a notification of the determined fault to the first vehicle of the plurality of vehicles. The notification is transmitted via at least one of a wireless communication networks and a wired communication network. Advantageously, the first vehicle is enabled to display the notification in a display device, thus informing a driver of the first electric vehicle, about the determined fault.

According to an embodiment, the method further comprises receiving, by the at least one electric vehicle supply equipment, an indication that additional power is required by the electrical power grid. In one example, the indication comprises information about an amount of electric power required by the electrical power grid. In another example, the electric power grid comprises information about an electrical load associated with the electrical power grid. The method further comprises receiving a battery health status associated with a second vehicle of the plurality of vehicles. The second vehicle may or may not be electrically coupled to the electrical power grid. The battery health status of the battery of the second vehicle comprises information associated with a voltage, a current, a temperature, a unique ID, a battery level, and a battery charging cycle of a battery of the second vehicle. The method further comprises supplying, by the at least one electric vehicle supply equipment, electric power from the second vehicle of the plurality of vehicles, based on the battery health status of the second vehicle of the plurality of vehicles. The electric power is supplied from the second vehicle based on the received battery health status of the second vehicle. Advantageously, the additional power requirement in the electrical power grid is remedied by supply of the electrical power from the battery of the second vehicle. Further, advantageously, the electric power is supplied to the electrical power grid only if the fault is determined to be absent in the battery of the second vehicle. Thus, the battery of the second vehicle is protected.

According to an embodiment, the method further comprises determining, by the at least one electric vehicle supply equipment, that a load demanded by the electrical power grid from the second vehicle of the plurality of vehicles, is greater than a first threshold, based on the analysis of the received first set of parameters and the received second set of parameters. The load is an amount of energy demanded by the electrical power grid from the second vehicle. The method further comprises selectively disconnecting, by the at least one electric vehicle supply equipment, the second vehicle of the plurality of vehicles, from the electrical power grid based on the determination that the load demanded by the electrical power grid is greater than the first threshold. In one example, the first threshold corresponds to a threshold limit of safe operation of a battery of the second vehicle of the plurality of vehicle. The threshold limit of safe operation of the battery is an electrical load which can be received from the battery, without damaging the battery. In another example, the first threshold corresponds to a battery capacity of the battery of the second vehicle of the plurality of vehicles. Advantageously, the second vehicle is protected from being operated at a load which is greater than the threshold limit of safe operation of the battery of the second vehicle, such that the other vehicle of the plurality of vehicles continue supply of the electric power to the electrical power grid. Advantageously, the battery of the second vehicle is protected from thermal runoffs. In one example, the electrical power grid is an internal power grid inside a house. The internal power grid may be powered only by the battery of the second vehicle. Advantageously, in such a case, the at least one electric vehicle supply equipment notifies the user if the load demanded by the internal power grid, from the battery of the second vehicle, is above a battery capacity of the battery of the second vehicle. Advantageously, the user is enabled to protect the battery of the second vehicle. In another example, the internal power grid is configured to charge the battery of the second vehicle.

According to an embodiment, the method further comprises determining, by the at least one electric vehicle supply equipment, that the electric load demanded by the electrical power grid is greater than a second threshold. The method further comprises controlling transmission to a user device of a user, of a request to reduce the electrical load which is connected to the electrical power grid. The electrical load can be reduced by disconnection of one or more electrical devices from the electrical power grid. Advantageously, the user is enabled to protect the electrical power grid from high load currents.

According to an embodiment, the method further comprises receiving, from a second vehicle, an indication that a battery level of the second vehicle is low. The battery level of the battery indicates an amount of charge stored in the battery. The method further comprises determining an absence of the fault in the battery of the second vehicle based on the analysis of the first set of parameters and the second set of parameters. The method further comprises charging a battery of the second vehicle of the plurality of vehicles using electric power obtained from the electrical power grid. The second vehicle is charged based on the determination of the absence of the fault in the electrical power grid. Advantageously, the electrical power grid is protected from one or more faults in the battery of the second vehicle.

According to an embodiment, the method further comprises receiving, by the at least one electric vehicle supply equipment, a third set of parameters associated with a battery of a second vehicle. The third set of parameters comprises a battery level, a battery discharging rate, voltage, current, temperature, unique ID and a number of battery cycles associated with the battery of the second vehicle. The method further comprises determining, by the at least one electric vehicle supply equipment, a connection mode to connect the second vehicle to the electrical power grid. The connection mode is determined based on an analysis of the third set of parameters. The connection mode is at least one of a vehicle-to-grid connection mode and a grid-to-vehicle connection mode. In the vehicle-to-grid connection mode, the second electric vehicle is configured to supply the electric power to the electrical power grid. In the grid-to-vehicle connection more, the battery of the second vehicle is charged by the electrical power grid. The method further comprises electrically coupling the second vehicle to the electrical power grid via the determined connection mode.
According to an embodiment, the method further comprises supplying, by the at least one electric vehicle supply equipment, electric power from the second vehicle, to the electrical power grid, when the second vehicle is connected to the electrical power grid via the vehicle to grid connection mode. Advantageously, any power shortage in the electrical power grid is remedied by the electric power supplied from the second vehicle. The method further comprises supplying, by the at least one electric vehicle supply equipment, the electric power from the electrical power grid to the second vehicle, when the second vehicle is connected to the electrical power grid via the grid to vehicle connection mode. Advantageously, any charge shortage in the battery of the second vehicle is remedied by the electric power supplied from the electrical power grid.

The invention also relates to a system managing faults in an electrical power grid. The system comprises a cloud computing platform comprising a battery protection module configured to perform the method according to an aspect of the invention. The electrical power grid comprises at least one electric vehicle supply equipment electrically coupled to the electrical power grid, and a plurality of vehicles connected to the electrical power grid via the at least one electric vehicle supply equipment.

The invention relates in one aspect to a computer program product having machine-readable instructions stored therein, that when executed by a processor, cause the processor to execute the method according to an aspect of the invention when the computer program is executed in the system. The processor may be one of an X86-based processor, a Reduced Instruction Set Computing (RISC) processor, an Application-Specific Integrated Circuit (ASIC) processor, a Complex Instruction Set Computing (CISC) processor, and/or other processors.

The invention relates in one aspect to an electric vehicle supply equipment which is electrically coupled to the electrical power grid. The electric vehicle supply equipment is configured to received the first set of parameters associated with the battery of each vehicle of the plurality of vehicles. The electric vehicle supply equipment is further configured to receive the second set of parameters which are associated with the electrical power grid.

According to an embodiment, the electric vehicle supply is configured to determine the fault in the first vehicle of the plurality of vehicles. The determined fault is a fault in the battery of the first vehicle. The fault is determined based on an analysis of the received first set of parameters and the received second set of parameters. The determined fault is an electrical fault.

According to an embodiment, the electric vehicle supply equipment is configured to selectively disconnecting the first vehicle from the electrical power grid based on the determined fault, such that other vehicles of the plurality of vehicles remain electrically coupled to the electrical power grid. Advantageously, the electrical power grid is protected from the determined fault of the battery of the first vehicle. Further, advantageously, the determined fault of the first vehicle are prevented from being exacerbated by connection to the electrical power grid. The electric vehicle supply equipment is further configured to transmit a notification of the determined fault to the first vehicle of the plurality of vehicles. The notification is transmitted via at least one of a wireless communication networks and a wired communication network. Advantageously, the first vehicle is enabled to display the notification in a display device, thus informing a driver of the first electric vehicle, about the determined fault.

According to an embodiment, the electric vehicle supply equipment is further configured to receive the indication that additional power is required by the electrical power grid. The electric vehicle supply equipment is further configured to receive a battery health status associated with a second vehicle of the plurality of vehicles. The second vehicle may or may not be electrically coupled to the electrical power grid. The electric vehicle supply equipment is further configured to receive electric power from the second vehicle of the plurality of vehicles, based on the battery health status of the second vehicle of the plurality of vehicles. Advantageously, the additional power requirement in the electrical power grid is remedied by supply of the electrical power from the battery of the second vehicle. Further, advantageously, the electric power is supplied to the electrical power grid only if the fault is determined to be absent in the battery of the second vehicle. Thus, the battery of the second vehicle is protected.

According to an embodiment, the electric vehicle supply equipment is further configured to determine that the load demanded by the electrical power grid from the second vehicle of the plurality of vehicles, is greater than a first threshold, based on the analysis of the received first set of parameters and the received second set of parameters. The electric vehicle supply equipment is configured to selectively disconnect the second vehicle of the plurality of vehicles, from the electrical power grid based on the determination that the load demanded by the electrical power grid is greater than the first threshold. Advantageously, the second vehicle is protected from being operated at a load which is greater than the threshold limit of safe operation of the battery of the second vehicle, such that the other vehicle of the plurality of vehicles continue supply of the electric power to the electrical power grid. Advantageously, the battery of the second vehicle is protected from thermal runoffs.

According to an embodiment, the electric vehicle supply equipment is further configured to determine that the load demanded by the electrical power grid is greater than a second threshold. The method further comprises controlling transmission to a user device of a user, of a request to reduce the electrical load which is connected to the electrical power grid. The electrical load can be reduced by disconnection of one or more electrical devices from the electrical power grid. Advantageously, the user is enabled to regulate the load demanded by the electrical power grid.

According to an embodiment, the electric vehicle supply equipment is further configured to receive from a second vehicle, the indication that the battery level of the second vehicle is low. The battery level of the battery indicates an amount of charge stored in the battery. The electric vehicle supply equipment is configured to determine the absence of the fault in the battery of the second vehicle based on the analysis of the first set of parameters and the second set of parameters. The electric vehicle supply equipment is configured to charge the battery of the second vehicle of the plurality of vehicles using electric power obtained from the electrical power grid. The second vehicle is charged based on the determination of the absence of the fault in the electrical power grid. Advantageously, the electrical power grid is protected from one or more faults in the battery of the second vehicle.

These and other features and advantages of the present disclosure may be appreciated from a review of the following detailed description of the present disclosure, along with the accompanying figures in which like reference numerals refer to like parts throughout.

### BRIEF DESCRIPTION OF THE DRAWINGS

The present disclosure is further described hereinafter with reference to illustrated embodiments shown in the accompanying drawings, in which:
FIG. 1 is a schematic representation of a network environment for implementation of a system for fault management in an electrical power grid, in accordance with a first embodiment of the disclosure.
FIG. 2 is a block diagram that illustrates an exemplary electric vehicle supply equipment, in accordance with a first embodiment of the disclosure.
FIGs. 3A to 3D represent a process flowchart illustrating a detailed method of performing fault management in an electrical power grid, in accordance with a first embodiment of the disclosure.

### DETAILED DESCRIPTION

Various embodiments are described with reference to the drawings, wherein like reference numerals are used to refer the drawings, wherein like reference numerals are used to refer like elements throughout. In the following description, for the purpose of explanation, numerous specific details are set forth in order to provide thorough understanding of one or more embodiments. It may be evident that such embodiments may be practiced without these specific details.

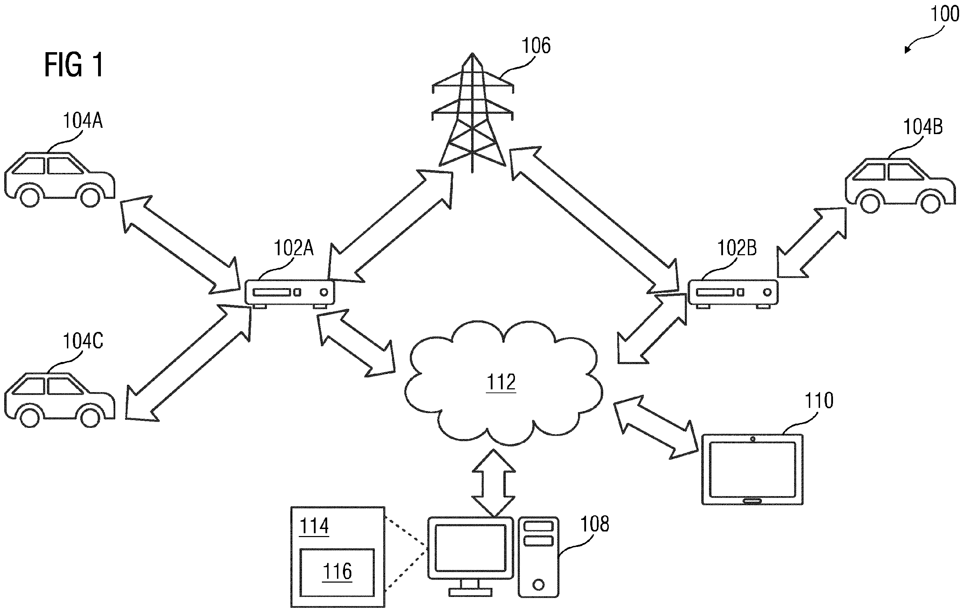

FIG. 1 is a schematic representation of a network environment 100 for implementation of a system for fault management in an electrical power grid 108, in accordance with a first embodiment of the disclosure. The network environment 100 includes a first electric vehicle supply equipment 102A, a second electric vehicle supply equipment 102B, and a plurality of vehicles (104A, 104B, and 104C). The first electric vehicle supply equipment 102A is electrically coupled to the first vehicle 104A. The second electric vehicle supply equipment 102B is electrically coupled to the second vehicle 104B. The network environment 100 further comprises the third vehicle 104C which is electrically coupled to the first electric vehicle supply equipment 102A. The first and second electric vehicle supply equipment (102A and 102B) are electrically coupled to the electrical power grid 106. The electrical power grid 106 is at least one of a direct current (DC) Power grid and an Alternating current (AC) power grid. The electrical power grid 106 comprises at least one electrical generator and a plurality of electrical apparatus which consume electrical power. The network environment 100 further comprises a server 108 and a user device 110. The first and second electric vehicle supply equipment (102A and 102B), the server 108, and the user device 110 are communicatively coupled to each other via a communication network 112.

The first electric vehicle supply equipment 102A and the second electric vehicle supply equipment 102B comprises suitable circuitry, interfaces, and/or code that is configured to transfer electric power between the electrical power grid 108 and at least one vehicle of the plurality of vehicles (104A, 104B, and 104C). In one example, the at least one of the first electric vehicle supply equipment 102A and the second electric vehicle supply equipment 102B is configured to charge a battery of at least one vehicle, of the plurality of vehicles (104A, 104B, and 104C), using electric power supplied by the electrical power grid 106. In another example, the first electric vehicle supply equipment 102A and the second electric vehicle supply equipment 102B are configured to supply electric power which is stored in the battery of the at least one vehicle, into the electrical power grid 106. In one example, the first electric vehicle supply equipment 102A and the second electric vehicle supply equipment 102B are portable electronic devices. In one example, the first electric vehicle supply equipment 102A and the second electric vehicle supply equipment 102B comprise an internet-of-things (IOT) enabled device which is a device capable of communicating with a plurality of electric vehicle supply equipment via an IOT network. In one example, the first electric vehicle supply equipment 102A and the second electric vehicle supply equipment 102B are connected to a common charging station. In another example, the first electric vehicle supply equipment 102A and the second electric vehicle supply equipment 102B are connected to different charging stations. The first electric vehicle supply equipment 102A and the second electric vehicle supply equipment 102B is a grid interface between the electric power grid 106 and the first, second, and third vehicle (104A, 104B, and 104C). In one example, the first electric vehicle supply equipment 102A and the second electric vehicle supply equipment 102B are universal electric vehicle supply equipment which are capable of supplying alternating current (AC) power as well as Direct current (DC) power to the plurality of vehicles (104A, 104B, and 104C). Further, the universal electric vehicle supply equipment is capable of supplying electric power to AC electrical power grids and DC electrical power grids.

The plurality of vehicles (104A, 104B and 104C) comprises suitable circuitry, interfaces, and/or code that is configured to transfer the electric power, from at least one battery of the plurality of vehicles (104A, 104B and 104C), into the electrical power grid 106 and to transfer the electric power, from the electric power grid 106, to the at least one battery of the plurality of vehicles (104A, 104B and 104C). In one example, the plurality of vehicles (104A, 104B and 104C) comprises electric cars, electric motorcycles, electric planes, and unmanned aerial vehicles. In one example, the plurality of vehicles (104A, 104B and 104C) comprises hybrid vehicles which includes an electric generator which is configured to generate the electric power. In one example, the electrical power transferred by the plurality of vehicles (104A, 104B and 104C), into the electrical power grid 106, is generated by the electric generator present inside the plurality of vehicles (104A, 104B and 104C). Advantageously, any shortage of the electric power in the electrical power grid 106, is remedied by discharge of at least one battery in the plurality of vehicles (104A, 104B, and 104C).

The server 108 comprises suitable circuitry, interfaces, and/or code that is configured to store a plurality of parameters associated with the electrical power grid 106. The server 108 is configured to communicate with the first electric vehicle supply equipment 102A and the second electric vehicle supply equipment 102B and with the plurality of vehicles (104A, 104B, and 104C) via the network 112. In one example, the server 108 is configured to host a cloud computing platform 114. The cloud computing platform 114 comprises a battery protection module 116 which is configured to perform one or more method steps to perform fault management in the electrical power grid 106. In one example, the battery protection module 116 is implemented as a system-on-chip, or application specific integrated chip, or stored in a non-transient medium as machine readable instructions, which is executable by one or more processors.

The user device 110 comprises suitable circuitry, interfaces, and/or code that is configured to receive information from the first electric vehicle supply equipment 102A and the second electric vehicle supply equipment 102B via the network 112. Examples of the user device 110 include, but are not limited to, a personal computer, a tablet computer, a smartphone, a laptop, a computer workstation, an augmented reality based device, a computing device, a server, a human-machine interface (HMI) unit, and/or other consumer electronic (CE) devices. In one example, the user device 110 comprises a location sensor such as a global positioning system (GPS) sensor. The user device 110 further comprises a plurality of other sensors such as gyroscopes, accelerometers, altimeters, and electronic compasses. The user device 110 further comprises at least one image capture device such as a camera and at least one sound capture device such as a microphone. The user device 110 is configured to receive information associated with fault prediction, battery health monitoring, battery usage data, and peak demand requests associated with the plurality of vehicles (104A, 104B, and 104C).

In accordance with one embodiment, the first electric vehicle supply equipment 102A, the second electric vehicle supply equipment 102B, the plurality of vehicles (104A, 104B, and 104C), the server 108, and the user device 110 are implemented as Internet-of-things (IOT) devices which is part of the cloud computing platform 114, which is an Internet of Things (IOT)-cloud computing platform. The lOT-cloud computing platform may be a cloud infrastructure capable of providing cloud-based services such as data storage services, data analytics services, and data visualization services, based on the captured dynamic process data. The lOT-cloud computing platform may be part of a public cloud or a private cloud. The lOT-cloud computing platform may enable data scientists/vendors to provide one or more software applications or a firmware as a service, thereby eliminating a need for software maintenance, upgrading, and backup by one or more users. The one or more software applications may be a full application, or a software patch. In some embodiments, the one or more software applications may comprise an analytical application for performing data analytics on the plurality of parameters associated with the electrical power grid 106. For example, the one or more software applications may include an application for down-sampling of time-series data, filtering time-series data based on thresholds, performing Fast-Fourier transform on the plurality of parameters associated with the electrical power grid 106. Examples of the firmware may include but is not limited to Program Logic Controller (PLC) firmware, Human Machine Interface (HMI) firmware, firmware for motor drivers and firmware for robots. The cloud computing platform 114 comprises the battery protection module 116 which is configured to perform one or more method steps to perform fault management in the electrical power grid 106.

The network 112 includes a communication medium through which the first electric vehicle supply equipment 102A, the second electric vehicle supply equipment 102B, the plurality of vehicles (104A, 104B, and 104C), the server 108, and the user device 110 may communicate with each other. Examples of the network 112 includes, but are not limited to, a telecommunication network such as a Public Switched Telephone Network (PSTN), a 2G network, a 3G network, a 4G network, the Internet, a cloud network, a Wireless Fidelity (Wi-Fi) network, a Local Area Network (LAN), and/or a Metropolitan Area Network (MAN). Various devices in the network environment 100 may be configured to connect to the network 112, in accordance with various wired and wireless communication protocols. Examples of such wired and wireless communication protocols may include, but are not limited to, at least one of a Transmission Control Protocol and Internet Protocol (TCP/IP), User Datagram Protocol (UDP), Hypertext Transfer Protocol (HTTP), File Transfer Protocol (FTP), ZigBee, EDGE, IEEE 802.11, IEEE 802.11b, IEEE 802.11g, IEEE 802.11n, and/or any other IEEE 802.11 protocol, multi-hop communication, wireless access point (AP), device to device communication, cellular communication protocols, Light-fidelity (Li-Fi), Internet-of-Things (loT) network protocols, or Bluetooth (BT) communication protocols, or a combination or variants thereof.

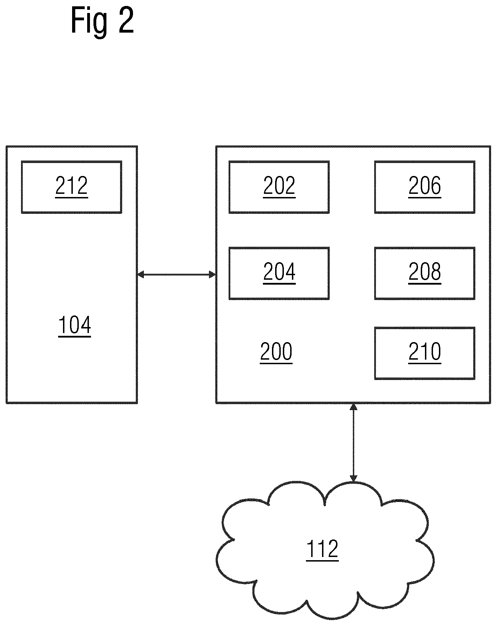

The first electric vehicle supply equipment 102A, the second electric vehicle supply equipment 102B, may be implemented as an exemplary electronic device. Internal components of the exemplary device are explained with reference to FIG. 2. FIG. 2 is explained in conjunction with elements from FIG. 1.

Referring to FIG. 2, there is shown an exemplary electronic device 200 for management of faults in the electrical power grid 106. The electronic device 200 is at least one of the first electric vehicle supply equipment 102A, and the second electric vehicle supply equipment 102B. The electronic device 200 is electrically coupled to a vehicle 104 of the plurality of vehicles (104A, 104B, and 104C). The vehicle 104 comprises a battery 212 which is at least one of a nickel cadmium, lead ion, or lithium ion batteries.

The electronic device 200 may include one or more processors, such as a processor 202, a memory 204, a display device 206, an input device 208, and a network interface 210. The network interface 210 may be configured to communicate with one or more devices among the first electric vehicle supply equipment 102A, the second electric vehicle supply equipment 102B, the vehicle 104, the server 108, and the user device 110, via the network 112.

The processor 202 may comprise suitable logic, circuitry, interfaces, and/or code that may be configured to execute a set of instructions stored in the memory 204. The processor 202 may be implemented based on a number of processor 202 technologies known in the art. Other examples of the processor 202 may be an X86-based processor, a Reduced Instruction Set Computing (RISC) processor, an Application-Specific Integrated Circuit (ASIC) processor, a Complex Instruction Set Computing (CISC) processor, and/or other processors.

The memory 204 may comprise suitable logic, circuitry, and/or interfaces that may be configured to store a set of instructions executable by the processor 202. The memory 204 may be configured to store operating systems and associated applications. Examples of implementation of the memory 204 may include, but are not limited to, Random Access Memory (RAM), Read Only Memory (ROM), Electrically Erasable Programmable Read-Only Memory (EEPROM), Hard Disk Drive (HDD), a Solid-State Drive (SSD), a CPU cache, and/or a Secure Digital (SD) card.

The display device 206 may comprise suitable circuitry, interfaces, and/or code that may be configured to display information to a user. Examples of the display device 206 may include, but are not limited to, a Liquid crystal display (LCD), a Light emitting Diode (LED), a holographic display device and/or a projector device.

The input device 208 may comprise suitable circuitry, interfaces, and/or code that may be configured to receive information from the user. Examples of the input device 208 may include, but are not limited to, a keyboard, a camera, a microphone, a computer mouse, a trackpad and a joystick.

The network interface 210 may comprise suitable logic, circuitry, interfaces, and/or code that may be configured to establish communication between the first electric vehicle supply equipment 102A, the second electric vehicle supply equipment 102B, the plurality of vehicles (104A, 104B, and 104C), the server 108, and the user device 110, via the network 112. The network interface 210 may be implemented by use of various known technologies to support wired or wireless communication of the electronic device 200 with the network 110. The network interface 210 may include, but is not limited to, an antenna, a radio frequency (RF) transceiver, one or more amplifiers, a tuner, one or more oscillators, a digital signal processor, a coder-decoder (CODEC) chipset, a subscriber identity module (SIM) card, and/or a local buffer. The network interface 210 may communicate via wireless communication with networks, such as the Internet, an Intranet and/or a wireless network, such as a cellular telephone network, a wireless local area network (LAN) and/or a metropolitan area network (MAN). The wireless communication may use any of a plurality of communication standards, protocols and technologies, such as Global System for Mobile Communications (GSM), Enhanced Data GSM Environment (EDGE), wideband code division multiple access (W-CDMA), Long Term Evolution (LTE), code division multiple access (CDMA), time division multiple access (TDMA), Bluetooth, Wireless Fidelity (Wi-Fi) (such as IEEE 802.11, IEEE 802.11b, IEEE 802.11g, IEEE 802.11n, and/or any other IEEE 802.11 protocol), voice over Internet Protocol (VoIP), light fidelity (Li-Fi), Wi-MAX, a protocol for email, instant messaging, and/or Short Message Service (SMS). The network interface 210 may further comprise a global system for mobile (GSM) module.

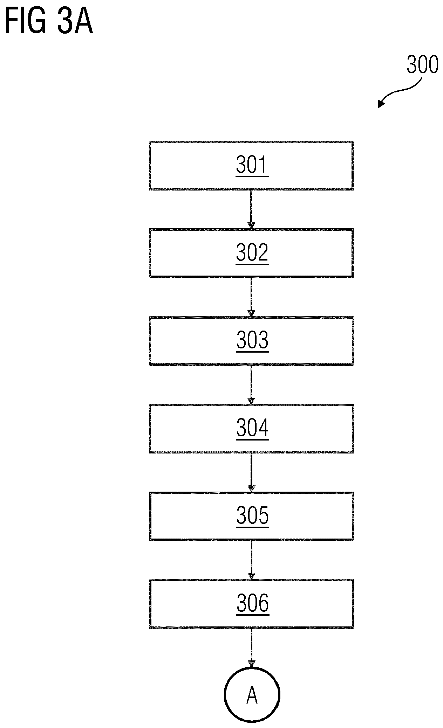

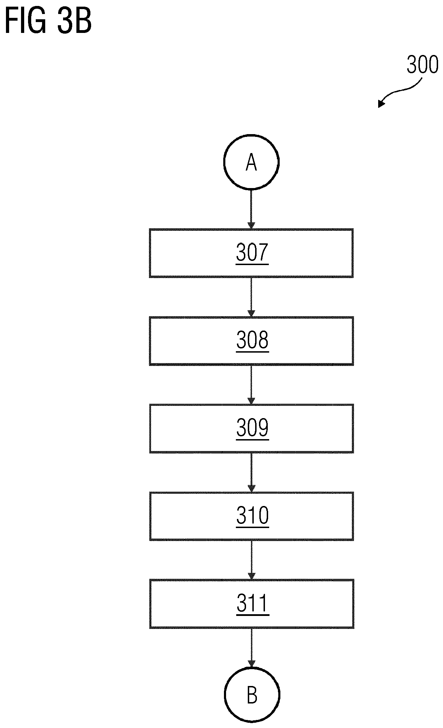

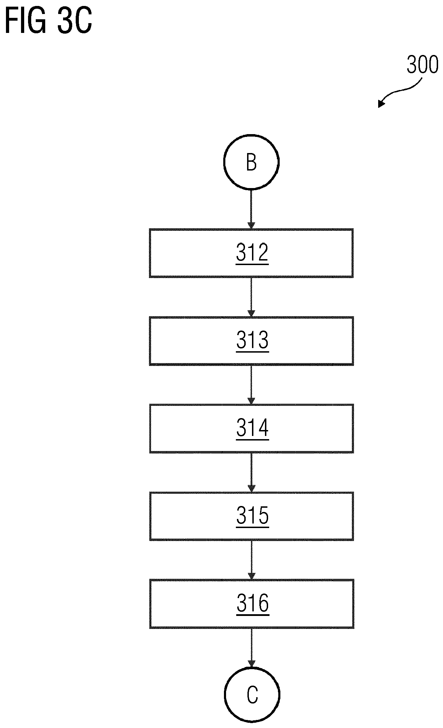

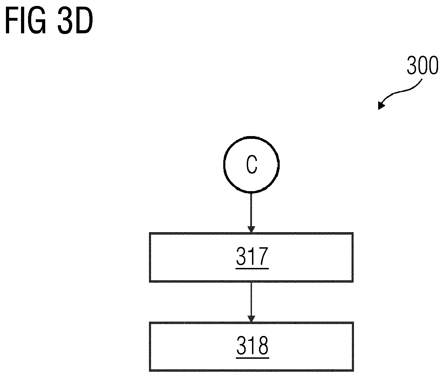

FIGs. 3A-3D comprises a process flowchart 300 illustrating a detailed method of performing fault management in the electrical power grid 106, in accordance with the first embodiment of the disclosure. FIG. 3 is explained in conjunction with elements from FIGs. 1 and 2.

At 301, a first set of parameters associated with the battery 212 of each vehicle of the plurality of vehicles (104A, 104B and 104C) is received by at least one of the first electric vehicle supply equipment 102A and the second electric vehicle supply equipment 102B via the network 112. The battery 212 of each vehicle may be at least one of a lithium ion battery, a lead ion battery, or a nickel cadmium battery. Examples of the first set of parameters associated with the battery 212 includes a battery level, a battery discharging rate, voltage, current, temperature, unique ID and a number of battery cycles associated with the battery of each vehicle of the plurality of vehicles. In one example, the at least one of the first electric vehicle supply equipment 102A and the second electric vehicle supply equipment 102B is configured to receive the first set of parameters from the plurality of vehicles (104A, 104B and 104C). In another example, the first set of parameters is stored in the server 108. In such a case, the at least one of the first electric vehicle supply equipment 102A and the second electric vehicle supply equipment 102B is configured to receive the first set of parameters from the server 108. In yet another example, the battery protection module 116 of the cloud based platform 114 is configured to receive the first set of parameters from one of the server 108 and the plurality of vehicles (104A, 104B and 104C).

At 302, a second set of parameters, which are associated with the electrical power grid, is received by the at least one of the first electric vehicle supply equipment 102A and the second electric vehicle supply equipment 102B via the network 112. The second set of parameters comprises a load demanded by the electrical power grid, a load increment, a peak demand, a main supply availability, an electrical load prediction data, information associated with power surges in the electrical power grid, and information about voltage fluctuations in the electrical power grid. In one example, the at least one of the first electric vehicle supply equipment 102A and the second electric vehicle supply equipment 102B is configured to receive the second set of parameters from one or more sensors in the electrical power grid 106. Examples of the one or more sensors include energy meters, voltmeters, and ammeters. In another example, the second set of parameters is stored in the server 108. In such a case, the at least one of the first electric vehicle supply equipment 102A and the second electric vehicle supply equipment 102B is configured to receive the second set of parameters from the server 108. In yet another example, the battery protection module 116 of the cloud based platform 114 is configured to receive the second set of parameters from one of the server 108 and the one or more sensors of the electrical power grid 106.

At 303, a fault is determined in the first vehicle 104A of the plurality of vehicles (104A, 104B, and 104C). The fault is determined by the first electric vehicle supply equipment 102A. The determined fault is a fault in a battery 212 of the first vehicle 104A the plurality of vehicles (104A, 104B, and 104C). Examples of the determined fault includes, but is not limited to temperature based battery faults, voltage based battery faults, current based voltage faults, short circuits in the battery 212 of the first vehicle, and open circuits in the battery 212 of the first vehicle 104A. The fault is determined by the first electric vehicle supply equipment 102A based on an analysis of the received first set of parameters and the received second set of parameters. In one example, the received first set of parameters and the received second set of parameters are analyzed with a protection algorithm. The protection algorithm is an computer executable algorithm, which when executed by a computer, cause the computer to determine the fault in the first vehicle 104A of the plurality of vehicles (104A, 104B, and 104C). In one example, the protection algorithm is stored in the first electric vehicle supply equipment 104A. In another example, the protection algorithm is stored in the server 108. In such a case, the server 108 is configured to receive the first set and the second set of parameters from the first electric vehicle supply equipment 102A. Further, in such a case, the server 108 is configured to analyze the first set and the second set of parameters, based on the protection algorithm, to determine the fault in the first vehicle 104A of the plurality of vehicles (104A, 104B, and 104C). In another example, the first set of parameters and the second set of parameters are analyzed based on an artificial intelligence based data model which is trained to predict the fault in the first vehicle 104A of the plurality of vehicles (104A, 104B, and 104C). In yet another example, the battery protection module 116 of the cloud based platform 114 is configured to analyze the first set and the second set of parameters, to determine the fault in the first vehicle 104A of the plurality of vehicles (104A, 104B, and 104C). In such a case, the cloud based platform 114 is configured to transmit a result of the determination to at least one of the first electric vehicle supply equipment 102A and the second electric vehicle supply equipment 102B. Further, one of the first electric vehicle supply equipment 102A and the cloud based platform 114 is configured to transmit the result of the determination to the user device 110. The user device 110 is configured to inform a user about the determined fault.

At 304, the first vehicle 104A is selectively disconnected from the electrical power grid 106 based on the determined fault associated with the first vehicle 104A, such that other vehicles (104B and 104C) of the plurality of vehicles (104A, 104B, and 104C) remain electrically coupled to the electrical power grid 106. Advantageously, the electrical power grid 106 is protected from the determined fault of the battery 212 of the first vehicle 104A. Further, advantageously, the determined fault of the first vehicle 104A are prevented from being exacerbated due to connection to the electrical power grid 106. The first electric vehicle supply equipment 102A is configured to selectively disconnect the first vehicle 104A from the electrical power grid 106, such that other vehicles (104B and 104C) of the plurality of vehicles (104A, 104B, and 104C) remain connected to the electrical power grid 106. In one example, the battery protection module 116 of the cloud computing platform 114, is configured to control the first electric vehicle supply equipment 102A to selectively disconnect the first vehicle 104A from the electrical power grid 106, such that other vehicles (104B and 104C) of the plurality of vehicles (104A, 104B, and 104C) remain connected to the electrical power grid 106.

At 305, a notification of the determined fault is transmitted to the first vehicle 104A of the plurality of vehicles (104A, 104B, and 104C). The notification is transmitted via the network 112. Advantageously, the first vehicle 104A is enabled to display the notification in a display device, thus informing a driver of the first electric vehicle 104A, about the determined fault. The first electric vehicle supply equipment 102A is configured to transmit the notification of the determined fault is transmitted to the first vehicle of the plurality of vehicles (104A, 104B, and 104C). In one example, the battery protection module 116 of the cloud computing platform 114, is configured to transmit the notification of the determined fault is transmitted to the first vehicle 104A of the plurality of vehicles (104A, 104B, and 104C).

At 306, an indication that additional power is required by the electrical power grid 106, is received by at least one of the first electric vehicle supply equipment 102A and the second electric vehicle supply equipment 102B. In one example, the indication comprises information about an amount of electric power required by the electrical power grid 106. In another example, the indication comprises information about an electrical load demanded by the electrical power grid 106. The first electric vehicle supply equipment 102A is configured to receive the indication that additional power is required by the electrical power grid 106. In one example, the battery protection module 116 of the cloud computing platform 114, is configured to receive the indication that additional power is required by the electrical power grid 106.

At 307, a battery health status associated with the second vehicle 104B of the plurality of vehicles (104A, 104B, and 104C) is received. The battery health status of the battery 212 of the second vehicle 104B comprises information associated with a voltage, a current, a temperature, a unique ID, a battery level, and a battery charging cycle of a battery 212 of the second vehicle 104B. In one example, the first electric vehicle supply equipment 102A is configured to receive the indication that additional power is required by the electrical power grid 106. In one example, the battery protection module 116 of the cloud computing platform 114, is configured to receive the indication that additional power is required by the electrical power grid 106.

At 308, electric power is supplied by the second electric vehicle supply equipment 102B from the second vehicle 104B of the plurality of vehicles (104A, 104B, and 104C), into the electric power grid 106, based on the battery health status of the second vehicle 104B of the plurality of vehicles (104A, 104B, and 104C). The electric power is supplied from the second vehicle 104B based on the received battery health status of the second vehicle 104B. Advantageously, the additional power requirement in the electrical power grid 106 is remedied by supply of the electrical power from the battery 212 of the second vehicle 104B. Further, advantageously, the electric power is supplied to the electrical power grid 106 based on the battery health status of the second vehicle 104B. Thus, a battery 212 of the second vehicle 104B is protected.

At 309, it is determined that a load demanded by the electrical power grid 106, from the second vehicle 104B of the plurality of vehicles (104A, 104B, and 104C), is greater than a first threshold, based on the analysis of the received first set of parameters and the received second set of parameters. The load is an amount of energy demanded by the electrical power grid 106 from the second vehicle 104B. In one example, the second electric vehicle supply equipment 102B is configured to determine that the load demanded by the electrical power grid 106, from the second vehicle 104B of the plurality of vehicles (104A, 104B, and 104C), is greater than the first threshold. In one example, the battery protection module 116 of the cloud computing platform 114, is configured to determine that the load demanded by the electrical power grid 106, from the second vehicle 104B of the plurality of vehicles (104A, 104B, and 104C), is greater than the first threshold.

At 310, the second vehicle 104B of the plurality of vehicles (104A, 104B, and 104C), is selectively disconnected from the electrical power grid 106 based on the determination that the load demanded by the electrical power grid 106 is greater than the first threshold. In one example, the first threshold corresponds to a threshold limit of safe operation of a battery 212 of the second vehicle 104B of the plurality of vehicles (104A, 104B, and 104C). The threshold limit of safe operation of the battery 212 is an electrical load which can be received from the battery 212, without damaging the battery 212. In another example, the first threshold corresponds to a battery capacity of the battery 212 of the second vehicle of the plurality of vehicles. Advantageously, the second vehicle 104B is protected from being operated at a load which is greater than the threshold limit of safe operation of the battery 212 of the second vehicle 104B, such that the other vehicles (104A, and 104C) of the plurality of vehicles (104A, 104B, and 104C) continue supply of the electric power to the electrical power grid 106. Advantageously, the battery 212 of the second vehicle 104B is protected from thermal runoffs. In one example, the second electric vehicle supply equipment 102B is configured to selectively disconnect from the electrical power grid 106 based on the determination that the load demanded by the electrical power grid 106 is greater than the first threshold. In another example, the battery protection module 116 of the cloud computing platform 114, is configured to selectively disconnect from the electrical power grid 106 based on the determination that the load demanded by the electrical power grid 106 is greater than the first threshold.

At 311, the electric load demanded by the electrical power grid is determined to be greater than a second threshold. In one example, the second electric vehicle supply equipment 102B is configured to determine that the load demanded by the electrical power grid 106 is greater than the second threshold, based on an analysis of the first set of parameters. In another example, the battery protection module 116 of the cloud computing platform 114, is configured determine that the load demanded by the electrical power grid 106 is greater than the second threshold.

At 312, a request to reduce the electrical load which is connected to the electrical power grid 106, is transmitted to the user device 110. The electrical load can be reduced by disconnection of one or more electrical devices from the electrical power grid. Advantageously, the user is enabled to protect the electrical power grid from high load currents. In one example, the second electric vehicle supply equipment 102B is configured to transmit the request to the user device 110. In another example, the battery protection module 116 of the cloud computing platform 114, is configured to transmit the request to the user device 110.

At 313, an message is transmitted to the second electric vehicle supply equipment 102B. The message is an indication that a battery level of the second vehicle 104B is low. The battery level of the battery 212 indicates an amount of charge stored in the battery 212. In one example, the battery protection module 116 of the cloud computing platform 114, is configured to transmit the message to the second electric vehicle supply equipment 102B.

At 314, an absence of the fault in the battery 212 of the second vehicle 104B, is determined based on the analysis of the first set of parameters and the second set of parameters. In one example, the second electric vehicle supply equipment 102B is configured to determine the absence of the fault in the battery 212 of the second vehicle 104B. In another example, the battery protection module 116 of the cloud computing platform 114, is configured to determine the absence of the fault in the battery 212 of the second vehicle 104B.

At 315, the battery 212 of the second vehicle 104B of the plurality of vehicles (104A, 104B, and 104C) is charged using the electric power obtained from the electrical power grid 106. The second vehicle 104B is charged based on the determination of the absence of the fault in the electrical power grid 106. Advantageously, the electrical power grid 106 is protected from one or more faults in the battery 212 of the second vehicle 104B. In one example, the second electric vehicle supply equipment 102B is configured to charge the battery 212 of the second vehicle 104B.

At 316, a third set of parameters associated with the battery 212 of the second vehicle 104B is received by the second electric vehicle supply equipment 102B. The third set of parameters comprises a battery level, a battery discharging rate, voltage, current, temperature, unique ID and a number of battery cycles associated with the battery 212 of the second vehicle 104B. In one example, the second electric vehicle supply equipment 102B is configured to receive the third set of parameters associated with the battery 212 of the second vehicle 104B. In another example, the battery protection module 116 of the cloud computing platform 114, is configured to receive the third set of parameters associated with the battery 212 of the second vehicle 104B.

At 317, a connection mode to connect the second vehicle 104B to the electrical power grid 106 is determined. The connection mode is determined based on an analysis of the third set of parameters. The connection mode is at least one of a vehicle-to-grid connection mode and a grid-to-vehicle connection mode. In the vehicle-to-grid connection mode, the second vehicle 104B is configured to supply the electric power to the electrical power grid 106. In the grid-to-vehicle connection more, the battery 212 of the second vehicle 104B is charged by the electrical power grid 106. In one example, the second electric vehicle supply equipment 102B is configured to determine the connection mode to connect the second vehicle 104B to the electrical power grid 106. In another example, the battery protection module 116 of the cloud computing platform 114, is configured to determine the connection mode to connect the second vehicle 104B to the electrical power grid 106.

At 318, the second vehicle 104B is electrically coupled to the electrical power grid 106 via the determined connection mode. In one example, the second electric vehicle supply equipment 102B is configured to electrically couple the second vehicle 104B to the electrical power grid 106. In another example, the battery protection module 116 of the cloud computing platform 114, is configured to control the second electric vehicle supply equipment 102B to electrically couple the second vehicle 104B to the electrical power grid 106. Advantageously, any charge shortage in the battery 212 of the second vehicle is remedied by the electric power supplied from the electrical power grid.

The present disclosure can take a form of a computer program product comprising program modules accessible from computer-useable or computer-readable medium storing program code for use by or in connection with the one or more computers, processors, or instruction execution system. For the purpose of this description, a computer-useable or computer readable medium can be any apparatus that can contain store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

The present disclosure may be realized in hardware, or a combination of hardware and software. The present disclosure may be realized in a centralized fashion, in at least one computer system, or in a distributed fashion, where different elements may be spread across several interconnected computer systems. A computer system or other apparatus adapted to carry out the methods described herein may be suited. A combination of hardware and software may be a general-purpose computer system with a computer program that, when loaded and executed, may control the computer system such that it carries out the methods described herein. The present disclosure may be realized in hardware that comprises a portion of an integrated circuit that also performs other functions.

While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### List of Reference Numbers

100 a network environment
102 electric vehicle supply equipment
102A and 102B first and second electric vehicle supply equipment
104 a vehicle
104A, 104B, 104C Plurality of vehicles
106 electrical power grid
108 server
110 user device
112 communication network
114 cloud computing platform
116 battery protection module
202 processor
204 memory
206 display device
208 input device
210 network interface

## Claims

1. A method of performing fault management in electrical power grids, the method comprising:
in an electrical power grid (106) comprising at least one electric vehicle supply equipment (102A, 102B):
receiving, by the at least one electric vehicle supply equipment (102A, 102B):
a first set of parameters associated with a battery (212) of each vehicle of a plurality of vehicles (104A, 104B, and 104C), and
a second set of parameters associated with the electrical power grid (106);
determining, by the at least one electric vehicle supply equipment (102A, 102B), a fault in a first vehicle (104A) of the plurality of vehicles (104A, 104B, and 104C), based on an analysis of the received first set of parameters and the received second set of parameters, wherein the fault is an electrical fault; and
selectively disconnecting the first vehicle (104A) of the plurality of vehicles (104A, 104B, and 104C) from the electrical power grid (106) based on the determined fault, such that other vehicles (104B, 104C) of the plurality of vehicles (104A, 104B, and 104C) remain electrically coupled to the electrical power grid (106).

2. The method according to claim 1, further comprising:
receiving, by the at least one electric vehicle supply equipment (102A, 102B), an indication that additional power is required by the electrical power grid (106);
receiving, by the at least one electric vehicle supply equipment (102A, 102B), a battery health status of a second vehicle (104B) of the plurality of vehicles (104A, 104B, and 104C); and
supplying, by the at least one electric vehicle supply equipment (102A, 102B), electric power from the second vehicle (104B) of the plurality of vehicles (104A, 104B, and 104C), into the electrical power grid (106), based on the battery health status of the second vehicle (104B) of the plurality of vehicles (104A, 104B, and 104C).

3. The method according to claim 2, further comprising:
determining, by the at least one electric vehicle supply equipment (102A, 102B), that a load demanded by the electrical power grid (106) from the second vehicle (104B) of the plurality of vehicles (104A, 104B, 104C), is greater than a first threshold, based on the analysis of the received first set of parameters and the received second set of parameters; and
selectively disconnecting the second vehicle (104B) of the plurality of vehicles (104A, 104B, and 104C), from the electrical power grid (106) based on the determination that the load demanded by the electrical power grid (106), from the second vehicle (104B), is greater than the first threshold,
wherein the second vehicle (104B) is selectively disconnected such that, after the selective disconnection of the second vehicle (104B), the electric power is supplied to the electrical power grid (106), from other vehicles (104A, 104C) of the plurality of vehicles (104A, 104B, 104C), and
wherein the first threshold corresponds to at least one of:
a battery capacity of the second vehicle (104B) of the plurality of vehicles (104A, 104B, 104C), and
a safe limit of operation of the battery (212) of the second vehicle (104B) of the plurality of vehicles (104A, 104B, 104C).

4. The method according to claim 3, further comprising:
determining, by the at least one electric vehicle supply equipment (102A, 102B), that the load demanded by the electrical power grid (106) is greater than a second threshold; and
transmitting, to a user device (110) of a user, a request to reduce the load which is connected to the electrical power grid (106).

5. The method according to claim 1, further comprising:
receiving, from a second vehicle (104B) of the plurality of vehicles (104A, 104B, and 104C), an indication that a battery level of the second vehicle 104B of the plurality of vehicles (104A, 104B, and 104C) is low;
determining absence of a fault in the electrical power grid (106) based on the analysis of the first set of parameters and the second set of parameters; and
charging, by the at least one electric vehicle supply equipment (102A, 102B), a battery of the second vehicle (104B) of the plurality of vehicles (104A, 104B, and 104C), using the electric power from the electrical power grid (106), wherein the second vehicle (104B) is charged based on the determination of the absence of the fault in the electrical power grid (106).

6. The method according to claim 1, further comprising transmitting a notification about the determined fault to the first vehicle (104A) of the plurality of vehicles (104A, 104B, and 104C).

7. The method according to claim 1, further comprising:
receiving, by the at least one electric vehicle supply equipment (102A, 102B), a third set of parameters associated with a battery (212) of a second vehicle (104B);
determining, by the at least one electric vehicle supply equipment (102A, 102B), a connection mode to connect the second vehicle (104B) to the electrical power grid (106), wherein
the connection mode is determined based on an analysis of the third set of parameters, and
the connection mode is one of a grid to vehicle connection mode and a vehicle to grid connection mode; and
connecting the second vehicle (104B) to the electrical power grid (106) via the determined connection mode.

8. The method according to claim 7, further comprising:
supplying, by the at least one electric vehicle supply equipment (102A, 102B), electric power from the second vehicle (104B), to the electrical power grid (106), if the second vehicle (104B) is connected to the electrical power grid (106) via the vehicle to grid connection mode; and
supplying, by the at least one electric vehicle supply equipment (102A, 102B), the electric power from the electrical power grid (106) to the second vehicle (104B), if the second vehicle (104B) is connected to the electrical power grid via the grid to vehicle connection mode.

9. A system for managing faults in an electrical power grid, the system comprising:
a cloud computing platform (114) comprising:
a battery protection module (116) configured to perform one or more method steps according to claims 1 to 8, wherein
the electrical power grid (106) comprises
at least one electric vehicle supply equipment (102A, 102B), configured to electrically coupled the electrical power grid 106 to a plurality of vehicles (104A, 104B, and 104C).

10. A computer-program product, having machine-readable instructions stored therein, that when executed by a processor (202), cause the processor (202) to perform method steps according to any of the claims 1-8.

11. An electric vehicle supply equipment (102A, 102B) electrically coupled to an electrical power grid (106), the electric vehicle supply equipment (102A, 102B) configured to:
receive, by the at least one electric vehicle supply equipment (102A, 102B):
a first set of parameters associated with a battery of each vehicle of a plurality of vehicles (104A, 104B, and 104C), and
a second set of parameters associated with the electrical power grid (106);
determine a fault in a first vehicle (104A) of the plurality of vehicles (104A, 104B, and 104C), based on an analysis of the received first set of parameters and the received second set of parameters, wherein the fault is an electrical fault; and
selectively disconnect the first vehicle (104A) from the electrical power grid (106) based on the determined fault, such that other vehicles (104B, 104C) of the plurality of vehicles (104A, 104B, and 104C) remain electrically coupled to the electrical power grid (106).

12. The electric vehicle supply equipment according to claim 11, further configured to:
receive an indication that additional power is required by the electrical power grid (106);
receiving a battery health status of a second vehicle (104B) of the plurality of vehicles (104A, 104B, and 104C); and
supplying electric power from the second vehicle (104B) of the plurality of vehicles (104A, 104B, and 104C), into the electrical power grid (106), based on the battery health status of the second vehicle (104B) of the plurality of vehicles (104A, 104B, and 104C).

13. The electric vehicle supply equipment according to claim 12, further configured to:
determine that a load demanded by the electrical power grid (106) from the second vehicle (104B) of the plurality of vehicles (104A, 104B, and 104C), is greater than a first threshold, based on the analysis of the received first set of parameters and the received second set of parameters; and
selectively disconnect the second vehicle (104B) from the electrical power grid (106) based on the determination that the load demanded by the electrical power grid (106) is greater than the first threshold,
wherein the second vehicle (104B) is selectively disconnected such that, after the selective disconnection of the second vehicle (104B), other vehicles (104A and 104C), of the plurality of vehicles (104A, 104B, and 104C), continue supply of the electric power into the electrical power grid (106), and
wherein first threshold corresponds to at least one of:
a battery capacity of the second vehicle (104B) of the plurality of vehicles (104A, 104B, and 104C), and
a safe limit of operation of a battery (212) of the second vehicle (104B) of the plurality of vehicles (104A, 104B, and 104C).

14. The electric vehicle supply equipment according to claim 13, further configured to:
determine that the load demanded by the electrical power grid (106) is greater than a second threshold; and
transmitting, to a user device (110) of a user, a request to reduce an electric load which is connected to the electrical power grid (106).

15. The electric vehicle supply equipment according to claim 11, further configured to:
receive, from a second vehicle 104B of the plurality of vehicles (104A, 104B, and 104C), an indication that a battery level of the second vehicle (104B) of the plurality of vehicles (104A, 104B, and 104C) is low;
determine presence of a fault in the electrical power grid (106) based on the analysis of the first set of parameters and the second set of parameters; and
charge a battery (212) of the second vehicle (104B) of the plurality of vehicles (104A, 104B, and 104C), using electric power from the electrical power grid (106), wherein the battery (212) of the second vehicle (104B) is charged based on the determination of the presence of the fault in the electrical power grid (106).
